(19) Europäisches Patentamt / European Patent Office / Office européen des brevets

(11) **EP 3 170 406 B1**

(12) **EUROPEAN PATENT SPECIFICATION**

(45) Date of publication and mention of the grant of the patent:
**23.01.2019 Bulletin 2019/04**

(21) Application number: **15821899.0**

(22) Date of filing: **16.07.2015**

(51) Int Cl.:
*A23L 5/00* *(2016.01)*    *A23D 7/00* *(2006.01)*

(86) International application number:
**PCT/JP2015/070361**

(87) International publication number:
**WO 2016/010101 (21.01.2016 Gazette 2016/03)**

(54) **GEL-FORM EMULSIFIED FOOD**

GELFÖRMIGES EMULGIERTES LEBENSMITTEL

ALIMENT ÉMULSIFIÉ SOUS FORME DE GEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2014 JP 2014146879**

(43) Date of publication of application:
**24.05.2017 Bulletin 2017/21**

(73) Proprietor: **The Nisshin OilliO Group, Ltd.**
**Tokyo 104-8285 (JP)**

(72) Inventor: **SUYAMA, Daisuke**
**Yokohama-shi,**
**Kanagawa 235-8558 (JP)**

(74) Representative: **Bawden, Peter Charles**
**Bawden & Associates**
**4 The Gatehouse**
**2 High Street**
**Harpenden, Hertfordshire AL5 2TH (GB)**

(56) References cited:
**EP-A1- 1 046 347        WO-A1-2013/186570**
**JP-A- H0 662 771        JP-A- 2000 309 794**
**JP-A- 2004 008 165        JP-A- 2009 261 361**
**JP-A- 2013 230 138        JP-A- 2014 014 292**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a high calorie, low carbohydrate gel-form emulsified food.

Background Art

It is sometimes difficult for elderly people or people during or after illness to have ordinary meals sufficiently, which may lead them into malnutrition. To cope with such a problem, various kinds of foods have been developed which enable sufficient nutrient intake with a small amount of ingestion. Especially, when the main purpose is the feeding of energy (calories), the intake efficiency is improved by increasing the lipid content. In addition, it is desirable that foods for ketogenic diet (for example, International Application Japanese-Phase Publication No. 2001-506587), diabetes diet, and low carbohydrate diet have a low carbohydrate content. JP2013230138 relates to gelatinous food that is high in calories and low in protein content, which enables an aged person who is suffering from a kidney disease to easily grind the food in the mouth and swallow it without its scattering and adhering in the mouth; and to take in sufficient nourishment even if it is taken in a small quantity.

For a lipid used in such foods, medium chain fatty acid triglycerides (MCT) are known. Since medium chain fatty acids included in MCT are quickly absorbed in the gastrointestinal tract, and decomposed and converted very promptly into energy by the liver, medium chain fatty acids can be quickly utilized after a meal. However, a large amount of ingestion of medium chain fatty acid triglycerides at one time may induce discomfort such as irritation at the pharynx and an upper portion of the stomach, and a heavy stomach feeling.

In addition, if these foods are in a liquid form, the foods are easy to ingest, but have limitations on the preservability and the lipid content due to a difficulty in stably dispersing the lipid in the foods. On the other hand, if these foods are in a solid form, the foods can be blended with even a high content of lipid stably, but they are inferior in taste and ease of eating. Then, if the foods are in a gel form, there are advantages in that the foods can be blended with a sufficient amount of lipid and are easy to eat. However, the gel foods with a high content of medium chain fatty acid triglycerides face a hurdle to get over for distribution in room temperature.

In this background, foods in a gel form have been desired which contain a high content of medium chain fatty acids and a low carbohydrate content, induce minimal discomfort after a meal, and can be distributed at room temperature.

Citation List

Patent Literature

Patent Literature 1: Japanese National Publication of International Patent Application No. 2010-506587

Summary of Invention

Technical Problems

The present invention provides a high calorie, low carbohydrate gel-form emulsified food that contains a high content of medium chain fatty acids and a low carbohydrate content, induces minimal discomfort after a meal, and provides the high calorie, low carbohydrates gel-form emulsified food which can be distributed at room temperature.

Solution to Problems

To attain the above objects, the present invention provides the following.

(1) A gel-form emulsified food including: 10 to 40% by mass of oil and/or fat; 0% by mass or more and less than 5% by mass of a carbohydrate; and 1 to 10% by mass of a protein, in which the content of a medium chain fatty acid is 7 to 23% by mass.
(2) The gel-form emulsified food according to (1), in which the amount of calories per 100 g of the gel-form emulsified food is 150 kcal or more.
(3) The gel-form emulsified food according to (1) or (2), in which a ketone ratio is 2.5 to 6, the ketone ratio being defined as oil and/or fat content/(carbohydrate content + protein content).
(4) The gel-form emulsified food according to any one of (1) to (3), in which 50% by mass or more of the medium chain fatty acid is n-decanoic acid.

(5) The gel-form emulsified food according to any one of (1) to (4), in which pH of the gel-form emulsified food is 4.5 to 7.5.

(6) A gel-form emulsified food adapted for distribution at room temperature, obtained by putting an emulsion into a container, sealing the container, heating the emulsion, and then cooling down the heated emulsion, the emulsion including: 10 to 40% by mass of oil and/or fat; 0% by mass or more and less than 5% by mass of a carbohydrate; and 1 to 10% by mass of a protein, in which the content of a medium chain fatty acid is 7 to 23% by mass.

(7) A production method of a gel-form emulsified food, including: putting an emulsion into a container and sealing the container; heating the emulsion; and cooling down the heated emulsion, the emulsion including: 10 to 40% by mass of oil and/or fat; 0% by mass or more and less than 5% by mass of a carbohydrate; and 1 to 10% by mass of a protein, in which the content of a medium chain fatty acid is 7 to 23% by mass.

Advantageous Effects of Invention

The present invention makes it possible to provide a high calorie, low carbohydrate gel-form emulsified food which contains a high content of medium chain fatty acids and a low carbohydrate content, and induces minimal discomfort after a meal. In addition, the present invention makes it possible to provide the high calorie, low carbohydrate gel-form emulsified food which can be distributed at room temperature. Description of Embodiment

[Gel-form Emulsified Food]

A gel-form emulsified food according to the present invention contains 10 to 40% by mass of oil and/or fat, 0% by mass or more and less than 5% by mass of a carbohydrate, and 1 to 10% by mass of a protein, and the content of a medium chain fatty acid is 7 to 23% by mass. The examples include jelly, pudding, jelly drink, and foods similar to these.

The packaging form for the gel food according to an embodiment of the present invention is not particularly limited, but any packaging form may be selected depending on the purpose as long as the packaging form is usually used for jelly, pudding, jelly drink, or the like. The examples include cups, cans, paper containers, aluminum pouches, bottles, and the like.

It is preferable that the amount of calories per 100 g of the gel-form emulsified food according to the present invention be 150 kcal or more. In addition, considering intake of sufficient nutrition with a small meal, it is more preferable that the amount of calories per 100 g be 200 kcal or more. The upper limit of the calorie is not particularly specified, but from the view point of ease of eating, it is preferable that the amount of calories per 100 g be 600 kcal or less and it is more preferable that the amount of calories per 100 g be 400 kcal or less. Note that the amount of calories is measured according to the modified Atwater method described in column 3 of appended table 1 of Nutrition Labeling Standards (the notification No. 146 of the Ministry of Health and Welfare, May 20, 1996).

(Oil and/or Fat)

The gel-form emulsified food according to the present invention contains 10 to 40% by mass of oils and/or fats. The content of the oils and/or fats is preferably 15 to 30% by mass, and more preferably 20 to 25% by mass. If the content of the oils and/or fats is less than 10% by mass, the total calorie of the gel-form emulsified food is low, which increases the amount of ingestion and imposes a burden for eating the food. If the blending amount of the oils and/or fats exceeds 40% by mass, the emulsification state becomes unstable, which may cause the syneresis or the separation.

The examples of the oils and/or fats include soybean oil, rapeseed oil, corn oil, sesame oil, sesame salad oil, perilla oil, linseed oil, peanut oil, safflower oil, sunflower oil, cotton seed oil, grape seed oil, macadamia nut oil, hazelnut oil, pumpkin seed oil, walnut oil, camellia oil, tea seed oil, perilla oil, borage oil, olive oil, rice oil, rice bran oil, wheat germ oil, palm oil, palm kernel oil, fish oil, medium chain fatty acid triglyceride, and mixed oils and/or fats, fractionated oils and/or fats, and transesterified oils and/or fats of these. The content of oils and/or fats includes the oils and/or fats derived from the ingredients blended into the gel-form emulsified food, for example, coconut oil contained in coconut powder, or the like.

Among these, it is preferable to contain, as a constituent fatty acid, triglycerides (hereinafter also referred to as MTG) including medium chain fatty acids, which are quickly converted into energy in the body. Here, the medium chain fatty acid refers to fatty acids with 6 to 12 carbon atoms. Specifically, from the viewpoint of energy efficiency and flavor, n-octanoic acid having 8 carbon atoms and n-decanoic acid having 10 carbon atoms are preferable. Such MTG includes, for example, medium chain fatty acid triglycerides (hereinafter also referred to as MCT) in which all the constituent fatty acids are medium chain fatty acids, and transesterified oils obtained from the transesterification of MCT and oils and/or fats other than MCT listed above as examples. As for the above MTG, to reduce a burden on the stomach caused by ingestion of a large amount of foods, the ratio of n-decanoic acid in the composition of medium chain fatty acids in MTG is preferably 50% by mass or higher, and more preferably 60% by mass or higher.

The above MCT can be obtained by an esterification reaction of glycerin and medium chain fatty acids having 6 to 12 carbon atoms derived from coconut oil or palm kernel oil as ingredients. The conditions for the esterification reaction are not particularly limited, and the reaction may be carried out under a pressure without a catalyst and a solvent, or may be carried out with a catalyst and a solvent.

As a method for adjusting the proportion of the fatty acids constituting the above MCT, for example, a method can be cited in which n-octanoic acid which is a fatty acid with 8 carbon atoms and n-decanoic acid which is a fatty acid with 10 carbon atoms in a desired ratio are prepared, and ester-bonded with glycerin.

A method for transesterifying the above MCT and the oils and/or fats other than MCT is not particularly limited, but may be any ordinary-conducted method such as chemical transesterification using sodium methoxide as a catalyst or enzymatic transesterification using lipase preparation as a catalyst.

As a method for checking and quantifying the constituent fatty acids in the above MTG, for example, a method can be cited in which the constituent fatty acids in the MTG are methyl-esterified, followed by quantitative analysis by gas chromatography.

The gel-form emulsified food according to the present invention contains 7 to 23% by mass of medium chain fatty acids derived from MTG. The content of the medium chain fatty acids is preferably 9 to 21% by mass, and more preferably 10 to 20% by mass. It is preferable that the content of the medium chain fatty acids contained in the gel emulsified according to the present invention be within the above range, because if so, especially even though a hard heat treatment is performed in a production process of the gel-form emulsified food, the medium chain fatty acids can be taken in without causing discomfort after a meal.

Note that the content of the medium chain fatty acids in the gel-form emulsified food is obtained by multiplying the product of the content of oils and/or fats (% by mass) of the gel-form emulsified food by the content of medium chain fatty acids (% by mass) in the constituent fatty acids of the oils and/or fats. For example, if the content of oils and/or fats in the gel-form emulsified food is 30% by mass and the content of medium chain fatty acids in the constituent fatty acids in the oils and/or fats is 70% by mass, the content of the medium chain fatty acids in the gel-form emulsified food is calculated as $30 \times 0.7 = 21$ (% by mass).

(Carbohydrate)

The gel-form emulsified food according to the present invention contains 0% by mass or more and less than 5% by mass of a carbohydrate. Here, the content of the carbohydrate is calculated by subtracting the quantities of protein, lipid, dietary fibers, an ash content, and a water content from the weight of a food, as prescribed in Nutrition Labeling Standards (the notification No. 146 of the Ministry of Health and Welfare, May 20, 1996). The examples include monosaccharides such as glucose, fructose, and galactose; oligosaccharides made of two to several linked monosaccharides such as sucrose (sugar), lactose, maltose; polysaccharides such as starch and glycogen. To be adapted to ketogenic diet, diabetes diet, and low carbohydrate diet, the content of a carbohydrate is preferably 0.1 to 4% by mass, and more preferably 0.5 to 3% by mass.

(Protein)

The gel-form emulsified food according to the present invention contains 1 to 10% by mass of a protein. Here, the content of the protein is a value measured according to the nitrogen determination conversion method prescribed in Nutrition Labeling Standards (the notification No. 146 of the Ministry of Health and Welfare, May 20, 1996). With the intention of increasing energy efficiency while meeting a requirement that the ketone ratio is within the range described later, the content of the protein is preferably 1.5 to 8% by mass, and more preferably 2 to 6% by mass. In the gel-form emulsified food according to the present invention, the protein is also useful for stability of emulsification and adjustment of viscosity. As for the protein, it is preferable, for example, to use ones having an emulsifying function for stabilizing the emulsification of the gel-form emulsified food, such as casein sodium and isolated soybean proteins, and ones having little emulsifying function such as denatured whey proteins, collagen, and denatured soybean proteins, together in a mass ratio of 1:2 to 2:1.

(Dietary Fiber)

The gel-form emulsified food according to the present invention may contain dietary fibers. Here, the content of dietary fibers is a value measured by the high performance liquid chromatography method or the Prosky method prescribed in Nutrition Labeling Standards (the notification No. 146 of the Ministry of Health and Welfare, May 20, 1996). In order to stabilize the emulsification and adjust the viscosity, the content of dietary fibers is preferably 0.5 to 4% by mass, and more preferably 1 to 3% by mass. The examples of dietary fibers include gelling agents such as gellan gum, xanthan gum, locust bean gum, guar gum, carrageenan, cellulose, agar, pectin, and the like. In particular, it is preferable to use agar as a part of dietary fibers. The content of agar in the gel-form emulsified food is preferably 0.1 to 0.6% by mass, and more preferably 0.2 to 0.5% by mass.

(Other Components)

The gel-form emulsified food according to the present invention may contain various nutritional components such as vitamins and minerals and food additives such as emulsifiers, high intensity sweeteners, antioxidants, flavors depending on the purposes, to an extent that these components and food additives do not impair the advantageous effects of the present invention. In addition, the gel-form emulsified food according to the present invention may also contain tastes components such as cocoa powder, coconut powder, green tea powder, vegetable puree, fruit puree.
Note that in the gel-form emulsified food according to the present invention, the remainder other than the various blended components is water, and the content of the water blended into the gel-form emulsified food according to the present invention is preferably 50 to 80% by mass, and more preferably 60 to 75% by mass.

(Ketone Ratio)

The ketone ratio of the gel-form emulsified food according to the present invention is preferably 2.5 to 6. Here, the ketone ratio is a value obtained by dividing the content of oils and/or fats in the gel-form emulsified food by the sum of the carbohydrate content and the protein content. The ketone ratio is calculated by the following formula:

```
ketone ratio = (oils and/or fats content/(carbohydrate

content + protein content)).
```

The ketone ratio of the gel-form emulsified food according to the present invention is preferably 3 to 5, and more preferably 3.9 to 4.5. If the ketone ratio is within the above range, the gel-form emulsified food is suitable for ketogenic diet, diabetes diet, and low carbohydrate diet.

(pH)

The pH of the gel-form emulsified food according to the present invention is preferably 4.5 to 8. The pH of the gel-form emulsified food is more preferably 5.5 to 7.5, and further preferably 6 to 7. It is preferable that the pH of the gel-form emulsified food be within the above range, because if so, aggregation of the protein can be prevented, and in addition, even though the content of medium chain fatty acids of the gel-form emulsified food is high, discomfort after a meal can be suppressed.

[Production Method of Gel-form emulsified food]

To produce the gel-form emulsified food according to the present invention, the ingredients other than oils and/or fats are mixed and dissolved in warm water at 70°C or higher to make a uniform preparation liquid. Next, after oils and/or fats are added, the preparation liquid is preliminary emulsified with a homomixer, and then homogenized (10 to 20 Mpa) with a homogenizer. After that, while the temperature of the mixture liquid (emulsified liquid) is kept at 50°C or higher, the preparation liquid is put into a container. Then, the container is sealed, followed by a heat treatment (85 to 130°C) and cooling it down. Thus, the gel-form emulsified food is obtained. It is preferable to prepare the gel-form emulsified food by performing a heat treatment in conditions higher and longer than those of heating at 120°C for 15 minutes so that the gel-form emulsified food is nonperishable during distribution at room temperature (20 to 40°C).

[Example]

Next, the present invention will be described in more detail using various examples

[Formulation of Gel-form Emulsified Food]

Various gel-form emulsified foods were produced following the formulations described tables 1 and 2. Note that the oils and/or fats used as ingredients are listed below. MCT1: trade name: MCT C10R (n-octanoic acid:n-decanoic acid = 3:7 (mass ratio)), manufactured by The Nissin OilliO Group, Ltd.
MCT2: trade name: MCT ODO (n-octanoic acid:n-decanoic acid = 75:25 (mass ratio)), manufactured by The Nissin OilliO Group, Ltd.

Rapeseed oil: trade name: Nissin canola oil, manufactured by The Nissin OilliO Group, Ltd.

[Production of Gel-form Emulsified Food]

According to the formulation described in tables 1 and 2, the ingredients were prepared and weighed, and the gel-form emulsified foods of Examples 1 to 9 and Comparative Examples 1 to 3 were produced in the following procedure.
First, gelling agent was dissolved in boiling water. Next, the ingredients other than the oils and/or fats were added and dissolved by stirring to obtain uniform mixture liquid. Then, the oils and/or fats were added and preliminarily emulsified with a homomixer, and further homogenized with a homogenizer. Thus, emulsified mixture liquid was obtained. After that, 40 g of the emulsified mixture liquid of each example was put into a plastic container, the plastic container was sealed, and the emulsified mixture liquid was subjected to retort sterilization (heat treatment at 121.1°C for 25 minutes) and then cooled down to obtain the gel-form emulsified food.

[Table 1]

| Table 1 Formulation, Nutritional Components, and Evaluation Results of Gel-form Emulsified Foods (numerical values in the formulation is % by mass) | | | | | | |
|---|---|---|---|---|---|---|
| | Ex. 1 | Ex. 2 | Ex. 3 | Ex. 4 | Ex. 5 | Ex. 6 |
| MCT1 | 13.0 | 15.0 | 15.0 | 17.0 | 17.0 | 20.0 |
| MCT2 | - | - | - | - | - | - |
| Rapeseed oil | 4.0 | 6.0 | 6.0 | 8.0 | 8.0 | 5.0 |
| Casein Na | 2.0 | 3.0 | 3.0 | 2.0 | 2.0 | 2.0 |
| Denatured whey protein | 1.0 | 1.0 | 1.0 | 1.0 | 1.0 | 1.0 |
| Collagen | 0.5 | 0.5 | 0.5 | 0.5 | 0.5 | 0.5 |
| Gelling agent | 2.37 | 2.62 | 2.77 | 2.37 | 2.52 | 2.52 |
| (Agar) | 0.4 | 0.4 | 0.5 | 0.4 | 0.5 | 0.5 |
| Emulsifier | 0.5 | 0.5 | 0.5 | 0.5 | 0.5 | 0.5 |
| High intensity sweetener | 0.15 | 0.15 | 0.15 | 0.15 | 0.15 | 0.15 |
| Flavor | 0.46 | 0.46 | 0.46 | 0.46 | 0.46 | 0.46 |
| Coloring agent | 0.1 | 0.1 | 0.1 | 0.1 | 0.1 | 0.1 |
| Coconut powder | - | - | - | - | - | - |
| Cocoa powder | - | - | - | - | - | - |
| Water | 75.92 | 70.67 | 70.52 | 67.92 | 67.77 | 67.77 |
| Total | 100.00 | 100.00 | 100.00 | 100.00 | 100.00 | 100.00 |
| Oils and Fats content (g/100g) | 17.4 | 21.4 | 21.4 | 25.4 | 25.4 | 25.4 |
| Carbohydrate content (g/100g) | 1.2 | 1.3 | 1.3 | 1.2 | 1.2 | 1.2 |
| Protein content (g/100g) | 3.2 | 4.1 | 4.1 | 3.2 | 3.2 | 3.2 |
| Medium chain fatty acid content (g/100g) | 13.0 | 15.0 | 15.0 | 17.0 | 17.0 | 20.0 |
| Calorie (kcal/100g) | 176.7 | 217.2 | 217.5 | 248.7 | 249.0 | 249.0 |
| pH | 6.5 | 6.5 | 6.5 | 6.5 | 6.5 | 6.5 |
| Ketone ratio | 4.0 | 4.0 | 4.0 | 5.8 | 5.8 | 5.8 |
| Evaluation result | | | | | | |
| Appearance evaluation | + | + | + | + | + | + |
| Sensory evaluation | + | + | + | + | + | + |

[Table 2]

| Table 2 Formulation, Nutritional Components, and Evaluation Results of Gel-form Emulsified Foods (numerical values in the formulation is % by mass) | | | | | | |
|---|---|---|---|---|---|---|
| | Ex. 7 | Ex. 8 | Ex. 9 | Comp. Ex. 1 | Comp. Ex. 2 | Comp. Ex. 3 |
| MCT1 | 15.0 | 16.0 | 16.0 | 25.0 | - | 20.0 |
| MCT2 | - | - | - | - | 25.0 | - |
| Rapeseed oil | 6.0 | 6.0 | 6.0 | 3.0 | 3.0 | 25.0 |
| Casein Na | 2.5 | 2.4 | 2.0 | 2.5 | 2.5 | 2.5 |
| Denatured whey protein | 1.25 | 1.25 | 0.75 | 1.25 | 1.25 | 1.25 |
| Collagen | 0.5 | 0.5 | 0.5 | 0.5 | 0.5 | 0.5 |
| Gelling agent (Agar) | 2.62 0.4 | 2.62 0.4 | 2.62 0.4 | 2.62 0.4 | 2.62 0.4 | 2.62 0.4 |
| Emulsifier | 0.5 | 0.5 | 0.5 | 0.5 | 0.5 | 0.5 |
| High intensity sweetener | 0.15 | 0.18 | 0.15 | 0.15 | 0.15 | 0.15 |
| Flavor | 0.55 | 0.4 | 0.05 | 0.55 | 0.55 | 0.55 |
| Coloring agent | 0.1 | - | - | 0.1 | 0.1 | 0.1 |
| Coconut powder | - | 2.0 | - | - | - | - |
| Cocoa powder | - | - | 3.5 | - | - | - |
| Water | 70.83 | 68.15 | 67.93 | 63.83 | 63.83 | 46.83 |
| Total | 100.00 | 100.00 | 100.00 | 100.00 | 100.00 | 100.00 |
| Oils and Fats content (g/100g) | 21.4 | 22.9 | 24.0 | 28.0 | 28.0 | 45.0 |
| Carbohydrate content (g/100g) | 1.3 | 1.5 | 2.9 | 1.3 | 1.3 | 1.3 |
| Protein content (g/100g) | 3.8 | 4.2 | 3.0 | 3.8 | 3.8 | 3.8 |
| Medium chain fatty acid content (g/100g) | 15.0 | 16.0 | 16.2 | 25.0 | 25.0 | 20.0 |
| Calorie (kcal/100g) | 216.2 | 232.9 | 232.9 | 279.2 | 279.2 | 432.2 |
| pH | 6.5 | 6.3 | 6.5 | 6.5 | 6.5 | 6.6 |
| Ketone ratio | 4.2 | 4.0 | 4.1 | 5.5 | 5.5 | 8.8 |
| Evaluation result | | | | | | |
| Appearance evaluation | + | + | + | + | + | -- |
| Sensory evaluation | + | + | + | - | -- | Notconduct ed |

[Characteristic Values of Gel-form Emulsified Food]

Tables 1 and 2 show the oils and/or fats contents, carbohydrate contents, protein contents, calories, and pH values of the gel-form emulsified foods of Examples 1 to 9 and Comparative Examples 1 to 3.

[Evaluation of Gel-form Emulsified Food]

According to the following evaluation criteria, appearance evaluation and sensory evaluation of the gel-form emulsified foods were comprehensively conducted by four expert panelists sensitive to discomforts about medium chain fatty acids. The evaluation results are shown in tables 1 and 2.

(Appearance Evaluation)

Taking out the gel foods produced as above from the plastic containers, the appearance was visually evaluated according to the following criteria.
+: Gelled, has a uniform color tone, and separation of water or oil is not recognized.
-: Not gelled. Or, has a ununiform tone, and separation of water or oil is recognized.

(Sensory Evaluation)

The gel-form emulsified foods produced as above were ingested, and irritation and discomfort to the pharynx and an upper part of the stomach were evaluated according to the following criteria.
+: No irritation or discomfort to the pharynx or an upper part of the stomach.
-: A slight irritation or discomfort to the pharynx or an upper part of the stomach.
--: An obvious irritation or discomfort to the pharynx or an upper part of the stomach.

**Claims**

1. A gel-form emulsified food comprising:

   10 to 40% by mass of oil and/or fat;
   0% by mass or more and less than 5% by mass of a carbohydrate; and
   1 to 10% by mass of a protein, wherein

   the content of a medium chain fatty acid is 7 to 23% by mass.

2. The gel-form emulsified food according to claim 1, wherein the amount of calories per 100 g of the gel-form emulsified food is 150 kcal or more.

3. The gel-form emulsified food according to claim 1 or 2, wherein
   a ketone ratio of the gel-form emulsified food is 2.5 to 6, the ketone ratio being defined as oil and/or fat content/(carbohydrate content + protein content).

4. The gel-form emulsified food according to any one of claims 1 to 3, wherein 50% by mass or more of the medium chain fatty acid is n-decanoic acid.

5. The gel-form emulsified food according to any one of claims 1 to 4, wherein pH of the gel-form emulsified food is 4.5 to 7.5.

6. A gel-form emulsified food adapted for distribution at room temperature, obtained by putting an emulsion into a container, sealing the container, followed by heating and then cooling it, the emulsion including: 10 to 40% by mass of oil and/or fat; 0% by mass or more and less than 5% by mass of a carbohydrate; and 1 to 10% by mass of a protein, in which the content of a medium chain fatty acid is 7 to 23% by mass.

7. A production method of a gel-form emulsified food, comprising putting an emulsion into a container and sealing the container, followed by heating and then cooling it, the emulsion including: 10 to 40% by mass of oil and/or fat; 0% by mass or more and less than 5% by mass of a carbohydrate; and 1 to 10% by mass of a protein, in which the content of a medium chain fatty acid is 7 to 23% by mass.

**Patentansprüche**

1. Gelförmiges emulgiertes Lebensmittel umfassend:

   10 bis 40 Massenprozent Öl und/oder Fett;
   0 Massenprozent oder mehr und weniger als 5 Massenprozent eines Kohlenhydrats; und
   1 bis 10 Massenprozent eines Proteins,

   worin der Gehalt einer mittelkettigen Fettsäure 7 bis 23 Massenprozent beträgt.

2. Gelförmiges emulgiertes Lebensmittel gemäß Anspruch 1, worin die Kalorienmenge pro 100 g des gelförmigen emulgierten Lebensmittels 150 kcal oder mehr beträgt.

3. Gelförmiges emulgiertes Lebensmittel gemäß Anspruch 1 oder 2, worin ein Ketonverhältnis des gelförmigen emulgierten Lebensmittels 2,5 bis 6 beträgt, wobei das Ketonverhältnis als Öl- und/oder Fettgehalt/(Kohlenhydratgehalt + Proteingehalt) definiert ist.

4. Gelförmiges emulgiertes Lebensmittel gemäß einem der Ansprüche 1 bis 3, worin 50 Massenprozent oder mehr der mittelkettigen Fettsäure n-Decansäure ist.

5. Gelförmiges emulgiertes Lebensmittel gemäß einem der Ansprüche 1 bis 4, worin der pH des gelförmigen emulgierten Lebensmittels 4,5 bis 7,5 beträgt.

6. Gelförmiges emulgiertes Lebensmittel, das für eine Verteilung bei Raumtemperatur geeignet ist, erhalten durch Einbringen einer Emulsion in einen Behälter, Verschließen des Behälters, gefolgt von Erwärmen und anschließend Kühlen derselben, wobei die Emulsion enthält: 10 bis 40 Massenprozent Öl und/oder Fett; 0 Massenprozent oder mehr und weniger als 5 Massenprozent eines Kohlenhydrats; und 1 bis 10 Massenprozent eines Proteins, in welchem der Gehalt einer mittelkettigen Fettsäure 7 bis 23 Massenprozent beträgt.

7. Herstellungsverfahren eines gelförmigen emulgierten Lebensmittels, umfassend das Einbringen einer Emulsion in einen Behälter und Verschließen des Behälters, gefolgt von Erwärmen und anschließend Kühlen derselben, wobei die Emulsion enthält: 10 bis 40 Massenprozent Öl und/oder Fett; 0 Massenprozent oder mehr und weniger als 5 Massenprozent eines Kohlenhydrats; und 1 bis 10 Massenprozent eines Proteins, in welchem der Gehalt einer mittelkettigen Fettsäure 7 bis 23 Massenprozent beträgt.

**Revendications**

1. Aliment émulsionné en forme de gel comprenant :

de 10 à 40 % en masse d'une huile et/ou graisse ;
0 % en masse ou plus et moins de 5 % en masse d'un hydrate de carbone ; et
de 1 à 10 % en masse d'une protéine, dans lequel

la teneur d'un acide gras à chaîne moyenne est de 7 à 23 % en masse.

2. Aliment émulsionné en forme de gel selon la revendication 1, dans lequel la quantité de calories pour 100 g de l'aliment émulsionné en forme de gel est de 150 kcal ou supérieure.

3. Aliment émulsionné en forme de gel selon la revendication 1 ou 2, dans lequel un rapport de cétone de l'aliment émulsionné en forme de gel est de 2,5 à 6, le rapport de cétone étant défini comme teneur en huile et/ou graisse/(teneur en hydrate de carbone + teneur en protéine).

4. Aliment émulsionné en forme de gel selon l'une quelconque des revendications 1 à 3, dans lequel 50 % en masse ou plus de l'acide gras à chaîne moyenne est l'acide n-décanoïque.

5. Aliment émulsionné en forme de gel selon l'une quelconque des revendications 1 à 4, dans lequel le pH de l'aliment émulsionné en forme de gel est de 4,5 à 7,5.

6. Aliment émulsionné en forme de gel adapté pour une distribution à température ambiante, obtenu par dépôt d'une émulsion dans un récipient, scellement du récipient, puis chauffage et ensuite refroidissement de celui-ci, l'émulsion incluant : de 10 à 40 % en masse d'huile et/ou graisse ; 0 % en masse ou plus et moins de 5 % en masse d'un hydrate de carbone ; et de 1 à 10 % en masse d'une protéine, dans lequel la teneur d'un acide gras à chaîne moyenne est de 7 à 23 % en masse.

7. Procédé de production d'un aliment émulsionné en forme de gel, comprenant la dépose d'une émulsion dans un récipient et le scellement du récipient, puis le chauffage et ensuite le refroidissement de celui-ci, l'émulsion incluant : de 10 à 40 % en masse d'une huile et/ou graisse ; 0 % en masse ou plus et moins de 5 % en masse d'un hydrate de carbone ; et de 1 à 10 % en masse d'une protéine, dans lequel la teneur d'un acide gras à chaîne moyenne est de 7 à 23 % en masse.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001506587 A
- JP 2013230138 B

- JP 2010506587 A